# FASCICULE DE BREVET EUROPEEN

(11) **EP 0 434 542 B1**
(45) Date de publication et mention de la délivrance du brevet: **14.09.1994**
(21) Numéro de dépôt: 90403637.3
(22) Date de dépôt: 18.12.1990
(51) Int. Cl.: B25J 5/02

(54) **Dispositif pour le conditionnement de produits divers**
Vorrichtung zum Verpacken von verschiedenen Produkten
Device for packaging various products

(30) Priorité: 19.12.1989 FR 8916779
(43) Date de publication de la demande: 26.06.1991
(73) Titulaire: Thibault, Jacques Gabriel Auguste, F-94000 Creteil (FR)
(72) Inventeur: Thibault, Jacques Gabriel Auguste, F-94000 Creteil (FR)
(74) Mandataire: Warcoin, Jacques

(56) Documents cités:
- DE-A- 3 614 165
- DE-A- 3 623 350
- FR-A- 2 465 477
- FR-A- 2 591 927
- RESEARCH DISCLOSURE, no. 303, juillet 1989, pages 537-538, New York, US; "Mobile robot system".

## Description

La présente invention concerne les opérations de conditionnement de produits divers dans des emballages individuels de nature appropriée suivant le type même de ces produits.

Actuellement ces opérations sont réalisées dans des chaînes de conditionnement constituées par une succession d'appareils affectés chacun à l'exécution d'une opération déterminée et qui sont reliés les uns à la suite des autres par des convoyeurs aptes à transférer chaque emballage d'un appareil déterminé jusqu'au suivant. Ainsi, dans le cas d'une chaîne conçue pour le conditionnement d'un produit liquide, celle-ci comporte une série d'appareils affectés successivement aux opérations suivantes : nettoyage de chaque récipient de conditionnement, puis remplissage et ensuite fermeture. Un autre appareil peut être prévu pour assurer ensuite l'étiquetage de chaque récipient. Enfin un autre appareil encore peut assurer le regroupement des récipients pour leur mise en place dans des emballages d'expédition et l'évacuation de ces derniers.

Dans une telle chaîne de conditionnement chacun des appareils prévus se suffit à lui-même pour exécuter l'opération qui lui est dévolue. A cet effet, en plus des outils de travail correspondant à une telle opération, il comporte des organes de manutention des emballages à traiter de façon à pouvoir prendre en charge chacun d'eux à l'entrée de l'appareil pour le restituer ensuite à la sortie de celui-ci.

Une telle solution a l'avantage d'assurer un rendement maximum pour des débits importants. Toutefois cette solution a pour inconvénient de manquer de souplesse. En effet, lorsqu'il y a lieu de changer un élément du conditionnement - par exemple le contenant, la présentation de celui-ci, son étiquette ou le type d'emballage de regroupement - comme l'exige assez souvent le marché et l'évolution des méthodes de vente, le temps nécessaire pour effectuer une modification appropriée d'une telle ligne de conditionnement réduit considérablement le rendement de celle-ci.

On connaît du document Research Disclosure No. 303 de Juillet 1989, New York, USA, qui décrit l'état de la technique le plus proche, un robot industriel qui peut être utilisé dans une ligne de conditionnement afin d'augmenter le rendement de celle-ci. Ce robot est suspendu sous un chariot déplaçable le long d'un monorail entre des postes de travail. Le chariot est déplacé à l'aide d'un moteur d'entraînement électrique relié à celui-ci. L'installation comporte une unité de commande qui commande l'opération générale du système, y compris le déplacement des chariots et les opérations d'accostage de ceux-ci dans les postes de travail.

Certes, ce robot apporte une certaine amélioration aux lignes de conditionnement, mais il ne permet pas la mise en oeuvre de toutes les opérations nécessaires jusqu'à l'obtention d'un produit regroupé, emballé et prêt à la distribution. Autrement dit, une telle unité n'est pas complète et n'offre pas la flexibilité souhaitée.

Cela vaut également pour le FR-A-2.465.467 qui décrit un dispositif de conditionnement automatisé d'ampoules pharmaceutiques, et plus particulièrement un dispositif à transfert circulaire. Ce dispositif comporte un plateau tournant sur lequel sont montés plusieurs dispositifs de maintien de manutention de groupes d'ampoules, répartis angulairement autour du plateau pour correspondre au nombre de postes de conditionnement. Ce dispositif ne constitue pas non plus une unité complète de conditionnement et il ne peut pas être facilement adapté à des types de produit complètement différents.

Autrement dit, l'emploi de lignes de conditionnement du type rappelé ci-dessus ne se justifie que dans le cas de débits importants portant sur un même type de produit et un même mode de conditionnement. En conséquence l'adoption de telles lignes de conditionnement ne peut pas être envisagée lorsqu'il s'agit de procéder au conditionnement d'un certain nombre de produits différents. Or, ceci est un cas fréquent.

L'invention a pour but de remédier à ces inconvénients en proposant un dispositif formant robot de conditionnement permettant la mise en oeuvre d'un procédé de conditionnement complet conçu pour permettre son adaptation rapide à des produits ou des types de conditionnement différents.

L'invention a pour objet un dispositif formant robot de conditionnement comportant:
- une série de mains de manipulation portées soit par un support mobile commun à l'ensemble de celles-ci, soit par des supports mobiles individuels, et qui sont aptes chacune à tenir un ou plusieurs emballages individuels à traiter et à lui faire subir différentes opérations voulues de manipulation dans l'espace,
- en regard de la trajectoire impartie, par ce ou ces supports mobiles, aux différentes mains de manipulation portées par ceux-ci, une série de postes de travail aptes à réaliser différentes opérations successives de conditionnement et ce, conjointement avec les manipulations particulières assurées par les mains de manipulation,
- des moyens de commande aptes à assurer d'une part l'avance programmée du ou des supports mobiles des mains de manipulation, et d'autre part la commande de ces dernières de façon que chacune de celles-ci effectue des mouvements différents à l'endroit des divers postes de travail, eu égard à la fonction particulière de chacun d'eux,
caractérisé en ce que le robot de conditionnement est associé à un robot secondaire de conditionnement apte à assurer les opérations suivantes :
- préparation d'emballages de regroupement destinée à recevoir un certain nombre d'emballages individuels provenant du robot principal,
- remplissage et fermeture de chacun de ces emballages de regroupement,
- mise en place de ceux-ci sur un moyen d'évacuation ou de transport, par exemple une palette, l'association de ces deux robots constituant ainsi une unité complète de conditionnement.

Ainsi, ce dispositif présente une très grande souplesse puisque les postes spécialisés de travail peuvent être rapidement remplacés par des postes différents, ou bien encore que certains postes peuvent être mis hors service ou modifiés pour l'exécution d'opérations différentes. Par ailleurs, les moyens de manipulation des emballages dans ces postes peuvent eux-mêmes être rapidement adaptés à une modification des opérations de conditionnement puisqu'il suffit de modifier le réglage du système assurant d'une part la commande des mains de manipulation et d'autre part celle de leur ou leurs supports mobiles.

Le robot de conditionnement ainsi constitué peut donc être aisément adapté à un changement des opérations de conditionnement en fonction des cas et applications.

L'invention offre ainsi de telles unités complètes de conditionnement, ainsi que des installations comprenant plusieurs de ces unités qui peuvent être par exemple disposées en parallèle.

Du reste, d'autres particularités et avantages de l'objet de l'invention apparaîtront au cours de la description suivante. Celle-ci est donnée en référence aux dessins annexés à simple titre indicatif, et sur lesquels :
La figure 1 est une vue schématique en perspective d'une première forme de réalisation d'un dispositif selon l'invention formant robot de conditionnement.
La figure 2 est une vue en perspective de l'une des mains de manipulation prévues sur ce dispositif et de son support individuel.
La figure 3 en est une vue en coupe transversale selon la ligne III-III de la figure 2.
La figure 4 est une vue schématique en perspective d'une seconde forme de réalisation du dispositif selon l'invention.
La figure 5 est une vue en perspective d'une autre forme de réalisation encore d'un tel dispositif.
La figure 6 est un schéma illustrant les possibilités de réalisation d'une installation comprenant plusieurs dispositifs de conditionnement selon l'invention.

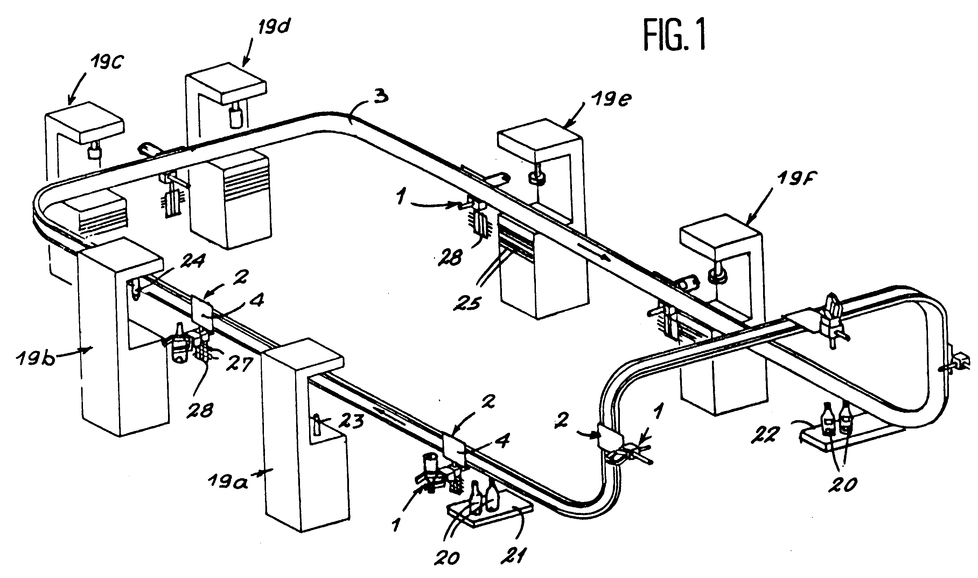

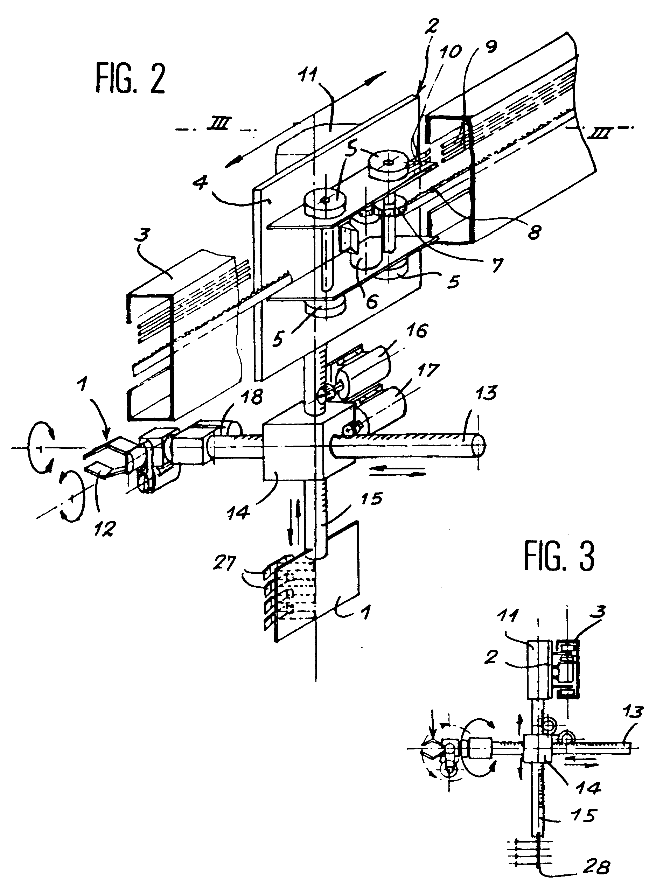

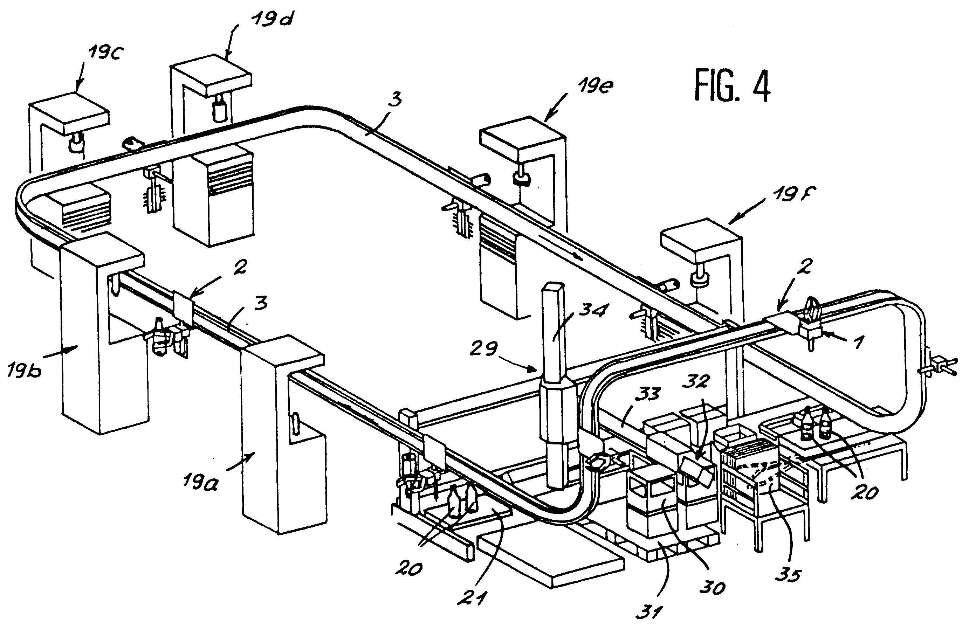

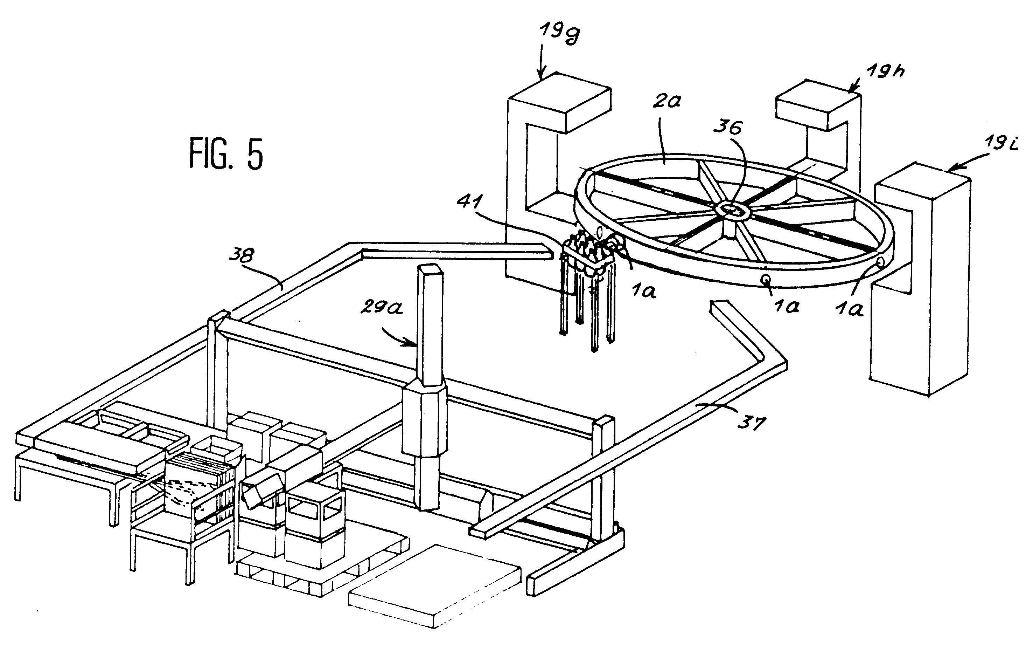

Le robot de conditionnement représenté aux figures 1 à 3 correspond à l'une des deux parties constitutives du dispositif selon l'invention, l'autre partie étant constituée par un robot secondaire 29 (figure 4) ou 29a (figure 5) qui est décrit ultérieurement. Le robot principal comprend une série de mains de manipulation désignées par la référence générale 1. Chacune de ces mains est portée par un support individuel 2. Dans l'exemple représenté, celui-ci consiste en un chariot monté mobile sur un rail de guidage constitué par un profilé métallique 3 impartissant une trajectoire en circuit fermé à l'ensemble des chariots correspondants. Au lieu d'un rail unique, il serait possible de prévoir plusieurs rails de guidage.

Le profilé 3 présente une section en C et chaque chariot 2 comporte une plaque verticale 4 disposée en regard de l'ouverture de ce profilé. Cette plaque sert de support à des roues 5 disposées à l'intérieur du profilé 3 et placées au contact du fond de ce dernier. Le déplacement de chaque chariot est assuré par un moteur électrique 6 entraînant un pignon 7 engrènant avec une crémaillère 8 prévue contre le fond du profilé 3. L'alimentation du moteur 6 en courant électrique est assurée à partir de pistes conductrices 9 portées par le fond du profilé 3 et contre lesquelles glissent des contacts 10 prévus sur chaque chariot.

Sur la plaque verticale 4 de chaque chariot est fixé un boîtier 11 portant la main de manipulation 1 correspondante. Dans l'exemple représenté, celle-ci consiste en une pince 12 fixée en bout d'un bras horizontal 13 qui est monté à la fois coulissant dans le sens axial et rotatif sur lui-même à l'intérieur d'un support 14. Ce dernier est lui-même susceptible de coulisser verticalement le long d'une tige verticale 15 portée par le boîtier 11. Ce dernier mouvement est commandé par un moteur électrique 16, deux autres moteurs, respectivement 17 et 18 commandant d'une part le coulissement du bras 13 et d'autre part la rotation de celui-ci sur lui-même. Ainsi, la pince 12 formant main de manipulation peut être déplacée en tous sens dans l'espace.

En regard du rail 3, il est prévu une série de postes de travail désignés par les références générales 19a, 19b,...... 19f. Ceux-ci sont aptes à réaliser différentes opérations successives de conditionnement. Ainsi dans le cas de l'exemple représenté à la figure 1 et qui concerne le conditionnement de bouteilles 20, ces différents postes sont capables d'effectuer les opérations successives suivantes :
- poste 19a : rinçage des bouteilles
- poste 19b : remplissage de celles-ci
- poste 19c : bouchage
- poste 19d : mise en place d'une capsule sur le bouchon
- poste 19e : apposition d'une étiquette sur le corps de la bouteille
- poste 19f : apposition d'une étiquette sur le col de celle-ci.

Le premier de ces postes 19a est disposé immédiatement après un poste 21 de prise en charge de chacune des bouteilles à conditionner. Quant au dernier poste 19f, il est situé immédiatement avant un poste 22 de restitution des bouteilles après achèvement des opérations de conditionnement.

Bien entendu, il ne s'agit là que d'un exemple possible d'application du dispositif selon l'invention. En effet celui-ci peut être conçu et adapté à toutes autres sortes d'opérations de conditionnement dans des emballages ou contenants de natures diverses, par exemple des bidons ou autres récipients, des boîtes en carton ou en matière plastique, etc. Quant aux produits à conditionner, ils peuvent être eux-mêmes de natures très différentes. En effet il peut s'agir de produits liquides, pulvérulents, granuleux, solides, etc.

Il convient de noter que les différents postes de travail sont dépourvus de moyens de manipulation des emballages à traiter, en l'occurrence les bouteilles 20. En effet, dans chacun de ces postes la manipulation de chaque bouteille est assurée par la même main 1 qui la tient. Il s'agit donc là d'une solution tout à fait différente de celle prévue dans les chaînes classiques de conditionnement constituées par une pluralité d'appareils différents dont chacun se suffit complètement à lui-même pour remplir une seule fonction et comporte des moyens de manutention aptes à prendre en charge un emballage à l'entrée de cet appareil pour le déposer à la sortie après réalisation de l'opération correspondante. Dans le cas du dispositif selon l'invention et du procédé mis en oeuvre par celui-ci, la solution est toute autre puisque chaque emballage est pris en charge par une main de manipulation à l'endroit du poste de départ 20 pour être libéré seulement au poste de restitution 22. Or, pendant tout ce temps de prise en charge, la main de manipulation correspondante assure d'une part le transfert de l'emballage correspondant d'un poste de travail jusqu'au suivant et d'autre part, à l'endroit de chaque poste, les différentes manipulations nécessaires pour placer l'emballage correspondant dans la ou les diverses positions voulues dans l'espace pour que les organes de travail de ce poste puissent effectuer les opérations voulues sur cet emballage.

Ainsi à l'endroit du poste 19a de remplissage, chaque main de manipulation 1 présente une bouteille 20 dans une position retournée pour engager son goulot sur un ajutage 23 d'injection d'eau. A l'endroit du poste de remplissage 19b, chaque main 1 présente la bouteille correspondante dans une position inverse pour engager son goulot sur un ajutage 24 de remplissage. D'une façon similaire, chaque main impartit d'autres déplacements à chaque bouteille dans les différents autres postes de travail, et ce en fonction même de la nature de l'opération prévues dans chacun d'eux.

La commande des manipulations particulières prévues à l'endroit de chaque poste de travail est assurée à partir d'un dispositif de commande équipant chacun d'eux et qui est pourvu d'un programme particulier. Le circuit électrique de ce dispositif de commande est relié à des pistes conductrices 25 prévues sur le socle 26 de chaque poste de travail. Pour leur part, les chariots 2 portent chacun une série de contacts 27 prévus sur une plaquette verticale 28 et qui sont aptes à venir au contact des différentes pistes 25 d'un poste de travail, lorsque le chariot correspondant est parvenu à l'endroit de celui-ci. Ces contacts sont reliés aux circuits d'alimentation des différents moteurs 16, 17 et 18. Ainsi, les organes d'actionnement de chaque main de manipulation reçoivent les impulsions nécessaires pour impartir à celles-ci les mouvements voulus, et ce en fonction de la nature même des opérations prévues dans chaque poste de travail.

Les pistes conductrices 9 prévues dans le rail 3 de guidage sont interrompues à l'endroit de chaque poste de travail pour assurer l'arrêt de chaque chariot 2 à l'endroit de celui-ci, un dispositif de freinage et d'arrêt pouvant en outre être prévu. Quant au redémarrage, il peut être assuré à partir d'une impulsion fournie par certaines des pistes 25 de chaque poste de travail. L'agencement prévu permet d'assurer l'avance programmée des différents chariots 2.

Cependant cet agencement permet une très grande souplesse de fonctionnement et d'utilisation. Ainsi, il peut être prévu des temps de stationnement différents à l'endroit des divers postes de travail en fonction de la durée des opérations prévues. Il peut également être prévu un arrêt de plusieurs chariots 2 avant un poste de travail déterminé de façon à permettre un temps de stationnement plus long dans certains postes de travail, etc.

Comme il a déjà été indiqué, la conception particulière du présent dispositif de conditionnement permet une très grande souplesse d'adaptation à des travaux différents et ce, en fonction de la nature des produits à conditionner ainsi que du type des emballages prévus. Ainsi le programme de commande des chariots 2 et des mains de manipulation peut être modifié ou remplacé par un programme différent pour qu'un ou plusieurs postes de travail soient "sautés" et mis ainsi hors service. De plus, dans une forme de réalisation avantageuse du présent dispositif, les postes de travail 19a, 19b,... sont montés mobiles de façon à pouvoir être enlevés pour être remplacés par des postes aptes à effectuer des opérations différentes. Ainsi, ces postes peuvent être montés sur roulettes en étant équipés d'un dispositif de blocage dans leur position d'utilisation. On peut donc de la sorte modifier très rapidement un robot de conditionnement selon l'invention pour l'adapter à des travaux différents de conditionnement.

La figure 4 représente une forme particulière de réalisation dans laquelle le robot de conditionnement décrit précédemment est associé à un robot secondaire apte à effectuer un certain nombre d'opérations complémentaires en aval, et éventuellement en amont, de celles réalisées dans le robot principal. Ainsi, dans l'exemple représenté à la figure 4, ce robot secondaire désigné par la référence générale 29, est apte à assurer les opérations suivantes:
- préparation de caisses de regroupement en carton destinées à recevoir un certain nombre de bouteilles 20 qui ont été conditionnées par le robot principal,
- remplissage et fermeture de chacune de ces caisses de regroupement,
- mise en place d'une quantité déterminée de celles-ci sur une palette 31 ou tout autre moyen d'évacuation ou de transport, par exemple un convoyeur.

Cependant ce robot secondaire 29 peut également être utilisé pour alimenter en bouteilles 20 le poste 21 à l'endroit duquel celles-ci sont prises en charge par le robot principal. Dans l'exemple représenté, ce robot secondaire 29 est constitué par le dispositif de conditionnement faisant l'objet du brevet FR 2.591.927. Ce dispositif comporte un ou plusieurs outils de travail 32 disposés en bout d'un arbre 33 monté mobile sur une colonne verticale 34. Le fonctionnement de ce robot est assuré par un système de commande, qui lui impartit les différents déplacements nécessaires pour effectuer les opérations prévues, notamment, dans l'exemple représenté : ouverture de cartonnages 35 initialement pliés à plat, remplissage des caisses 30 ainsi obtenues, puis fermeture de celles-ci et évacuation.

Dans l'une et l'autre des formes de réalisation décrites ci-dessus, le dispositif selon l'invention peut faire l'objet de diverses variantes et autres formes d'exécution, et ce notamment en fonction de la nature des produits à conditionner et du type des emballages prévus. Ainsi, au lieu de saisir une seule bouteille 20 à la fois, les mains de manipulation 1 prévues dans le cas illustré aux figures 1 à 4 peuvent être agencées pour saisir deux bouteilles à la fois ou plus encore, ou bien tout autre type d'emballage. Par ailleurs, les mains de manipulation peuvent être agencées pour comporter un degré de liberté supplémentaire (double rotation). Au lieu d'être constituées par des pinces, ces mains peuvent comporter tous autres organes de préhension, par exemple des ventouses à dépression, etc.

Il est possible de prévoir un programme de travail tel que chaque main de manipulation 1 abandonne, en cours de route, l'emballage 20 saisi par elle, pour aller reprendre, en avant, un emballage similaire abandonné auparavant par une main précédente de manipulation, et ainsi de suite. Cette opération peut avoir lieu à l'endroit d'un ou plusieurs postes de travail déterminés, chaque emballage 20 y étant laissé après manipulation et mise en place dans la position voulue pour l'exécution des opérations prévues dans ce poste.

Il est également possible de prévoir que les mains de manipulation soient employées pour transporter un ou plusieurs outils spécifiques devant être adaptés sur certains postes de travail.

Au lieu d'être commandés par une série de différents dispositifs dont chacun équipe un poste de travail, les mouvements des mains de manipulation peuvent l'être par un dispositif central, les liaisons électriques voulues étant assurées par des pistes conductrices supplémentaires prévues sur le rail de guidage 3.

Dans une autre forme de réalisation encore du dispositif de conditionnement selon l'invention, les différentes mains de manipulation d'un tel dispositif peuvent être portées, non pas par des supports individuels comme cela est le cas sur les figures 1 à 4, mais par un support mobile unique assurant le déplacement de l'ensemble de ces mains. Une telle forme de réalisation est du reste représentée sur la figure 5.

Dans celle-ci, il est prévu une série de mains de manipulation 1a disposées à la périphérie d'un support commun 2a en forme de roue, lequel est monté rotatif autour d'un arbre vertical 36. Ce support impartit donc une trajectoire circulaire à l'ensemble des mains de manipulation 1a. Dans un tel cas, les postes de travail 19g, 19h et 19i du dispositif correspondant sont disposés autour du support rotatif 2a, de façon que chaque main de manipulation 1a puisse amener successivement un ou plusieurs emballages à l'endroit de chacun de ces postes.

Comme précédemment, les mains de manipulation 1a sont en mesure d'impartir à l'emballage saisi par chacune d'elles, les différents mouvements et manipulations qui sont nécessaires dans chaque poste de travail en fonction de la nature des opérations prévues dans ceux-ci. Au lieu de saisir directement un emballage 20, les mains de manipulation 1a peuvent être conçues pour saisir des supports intermédiaires 41 portant chacun un ou plusieurs emballages, comme représenté sur la figure 5. Une telle solution peut en effet être plus avantageuse dans le cas de certains types d'emballages. Une telle solution pourrait également être adoptée dans le cas des formes de réalisation selon les figures 1 et 4.

L'actionnement des organes de commande de chaque main de manipulation 1a peut être assuré par des moyens mécaniques d'entraînement, par exemple par des moteurs distincts recevant des consignes de fonctionnement provenant d'un système central de commande, une synchronisation appropriée étant prévue pour qu'à l'endroit de chaque poste la main de manipulation s'y trouvant reçoive les consignes voulues de fonctionnement.

Mais il est également possible dans un tel cas de prévoir une solution similaire à celle existant dans la forme de réalisation selon les figures 1 à 4, c'est-à-dire l'acheminement de consignes de commande à chaque main de manipulation à partir du poste de travail à l'endroit duquel celle-ci se trouve. En effet là encore, il est possible de prévoir d'une part des pistes conductrices 25 sur le socle de chaque poste de travail, et d'autre part des contacts correspondant sur chaque main de manipulation 1a.

Le dispositif de conditionnement ainsi constitué ne comporte pas la même souplesse ni les mêmes avantages que les dispositifs selon les figures 1 à 3. Cependant il peut convenir dans le cas d'opérations de conditionnement relativement simples et peu nombreuses.

Comme représenté à la figure 5, ce dispositif peut être associé à un robot secondaire 29a du même type que le robot 29 prévu dans le cas de la figure 4. Ce robot secondaire est alors raccordé au robot principal par deux convoyeurs, à savoir un convoyeur amont 37 d'alimentation du robot principal et un convoyeur 38 d'évacuation des emballages traités dans ce robot. Quant au robot secondaire 29a, il est alors agencé pour effectuer les mêmes opérations que le robot 29 de la figure 4.

Il est bien évident que dans le cas de la forme de réalisation selon la figure 5, le support mobile commun à l'ensemble des mains de manipulation pourrait être réalisé de façon différente à celle représentée à simple titre d'exemple. De même, les mains de manipulation pourraient être montées de façon différente sur ce support.

Dans le robot principal des figures 1 à 3, il serait possible de prévoir un système assurant automatiquement un changement de l'outillage équipant certains des postes de travail.

Dans l'une et l'autre formes de réalisation selon les figures 4 et 5, l'association d'un robot principal avec un robot secondaire 29 ou 29a, permet de réaliser une unité complète de conditionnement et d'emballage. Or, du fait même de la conception des deux robots prévus, une telle unité présente une très grande souplesse d'utilisation et d'adaptation à des travaux de natures différentes.

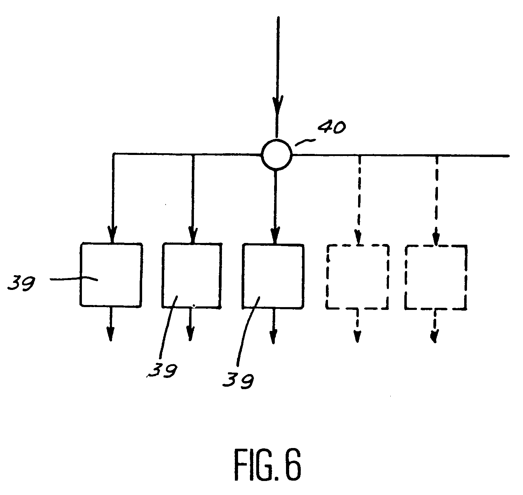

Il est possible de réaliser des installations de conditionnement regroupant plusieurs de ces unités de façon à pouvoir traiter des débits importants de produits à conditionner. Comme représenté sur la figure 6, ces unités, désignées chacune par la référence générale 39, peuvent alors être montées en parallèle à la suite d'un poste unique 40 d'alimentation. Cependant il est également possible de prévoir des circuits distincts d'alimentation pour adapter rapidement une telle installation à des travaux différents en affectant chacune des unités 39 de conditionnement à des opérations de natures différentes.

## Revendications

1. Dispositif pour le conditionnement de produits divers dans des emballages individuels, de nature appropriée, du type comportant :
- au moins un support (2, 2a),
- au moins une main de manipulation (1, 1a), portée par le support (2, 2a) et apte à tenir au moins un emballage individuel, et des organes (6, 7, 8) d'actionnement de la main de manipulation (1, 1a) portés par le support (2, 2a) et aptes à communiquer à la main de manipulation (1, 1a) des mouvements de manipulation de l'emballage dans l'espace, par rapport au support (2, 2a),
- des moyens (3, 6, 36) de déplacement du support (2, 2a) selon une trajectoire déterminée,
- une pluralité de postes de travail (19a-19i) qui sont disposés en regard de ladite trajectoire et dont chacun est apte à coopérer avec la main de manipulation (1, 1a), se trouvant à son endroit, pour réaliser une opération déterminée respective de conditionnement,
- des moyens (9, 10, 25, 27) de commande d'une part des moyens (3, 6, 36) de déplacement, pour amener la main de manipulation (1, 1a) à l'endroit des différents postes de travail, successivement, et d'autre part de chaque poste de travail (19a-19i) et des organes (16, 17, 18) d'actionnement de la main de manipulation (1, 1a) se trouvant à l'endroit de celui-ci, pour réaliser ladite opération déterminée respective de conditionnement, ces moyens de commande (9, 10, 25, 27) comportant notamment, à chaque poste de travail (19a-19i), des moyens (25) d'acheminement, entre ce poste de travail (19a-19i) et la main de manipulation (1, 1a) se trouvant à son endroit, de consignes relatives à ladite opération déterminée respective de conditionnement,
caractérisé en ce que les moyens de commande (9, 10, 25, 27) comportent, à chaque poste de travail (19a-19i), un dispositif respectif de commande, pourvu d'un programme particulier, pour transmettre aux organes (16, 17, 18) d'actionnement de la main de manipulation (1, 1a) se trouvant à l'endroit de ce poste de travail (19a-19i), par l'intermédiaire des moyens respectifs (25) d'acheminement de consignes, des consignes de commande des mouvements de cette main de manipulation (1, 1a) en fonction de l'opération déterminée respective.

2. Dispositif selon la revendication 1, caractérisé en ce que le support (2a) est commun à plusieurs mains de manipulation (1a) et présente la forme d'une roue montée rotative autour d'un arbre (36) et à la périphérie de laquelle sont disposées les mains de manipulation (1a), qui accomplissent une trajectoire circulaire.

3. Dispositif selon la revendication 1, caractérisé en ce que sont prévus plusieurs supports sous forme d'un ensemble de chariots (2) dont chacun porte une main de manipulation (1) respective et qui sont portés par au moins un rail de guidage (3) leur impartissant une trajectoire en circuit fermé.

4. Dispositif selon la revendication 3, caractérisé en ce que le rail de guidage (3) comporte une crémaillère (8) et en ce que chaque moteur de déplacement (6) porte un pignon (7) engrénant avec cette crémaillère (6).

5. Dispositif selon l'une des revendications 3 et 4, caractérisé en ce que chaque chariot (2) comporte un moteur électrique (6) de déplacement, en ce que le rail de guidage (3) comporte des pistes conductrices (9) d'alimentation électrique des moteurs (6) de déplacement des chariots (2) et en ce que chaque chariot (2) comporte des contacts (10) d'alimentation électrique du moteur (6) respectif, glissant contre les pistes conductrices (9) d'alimentation.

6. Dispositif selon la revendication 5, caractérisé en ce que les pistes conductrices d'alimentation (9) sont interrompues à l'endroit d'un poste de travail (19a-19f) pour assurer l'arrêt de chaque chariot (2) à l'endroit de celui-ci.

7. Dispositif selon l'une quelconque des revendications 1 à 6, caractérisé en ce que les moyens (25) d'acheminement de consignes comportent, à chaque poste de travail (19a-19i), des pistes conductrices (25) respectives et en ce que la ou chaque main de manipulation (1, 1a), respectivement, est munie de contacts (27) reliés à ses organes (16, 17, 18) d'actionnement et susceptibles de venir au contact de ces pistes conductrices (25) d'un poste de travail (19a-19i) lorsque la main de manipulation (1, 1a) se trouve à l'endroit de celui-ci.

8. Dispositif selon les revendications 6 et 7 en combinaison, caractérisé en ce que le redémarrage d'un chariot (2) arrêté à l'endroit d'un poste de travail (19a-19f) est assuré à partir d'une impulsion fournie par les pistes conductrices (25) de ce poste de travail (19a-19f).

9. Dispositif selon l'une quelconque des revendications 1 à 8, caractérisé en ce que la main de manipulation (1) comporte une pince (12) fixée en bout d'un bras horizontal (13) monté à la fois coulissant dans le sens axial et rotatif sur lui-même à l'intérieur d'un support (14) apte à coulisser verticalement par rapport au support (2, 2a) et en ce que les organes (16, 17, 18) d'actionnement de la main de manipulation comportent des moteurs électriques (16, 17, 18) commandant respectivement le coulissement du bras (13), sa rotation et le coulissement du support (14), de manière à déplacer la pince (12) en tous sens dans l'espace sur commande d'un dispositif de commande, équipant un poste de travail(19a-19i)

10. Dispositif selon l'une quelconque des revendications 1 à 9, caractérisé en ce que les postes de travail (19a-19i) sont interchangeables avec des postes aptes à effectuer des opérations différentes.

11. Installation comportant un dispositif selon l'une des revendications 1 à 10, caractérisée en ce qu'un robot secondaire (29, 29a) comportant un ou plusieurs outils de travail (32) disposés en bout d'un arbre (33) monté mobile sur une colonne verticale (34) est prévu pour alimenter en produits (20) un poste (21) de prise en charge des produits (20) par la main de manipulation (1).

12. Installation comprenant un dispositif selon l'une des revendications 1 à 10, caractérisée en ce que, en aval des opérations réalisées par le dispositif, un robot secondaire (29, 29a) effectue une ou plusieurs opérations complémentaires suivantes : regroupement de produits (20) en caisses, remplissage et fermeture des caisses de regroupement, mise en place des caisses sur un moyen d'évacuation et de transport.

## Claims

1. Device for packing various products in individual packages, of appropriate nature, of the type including:
- at least one support (2, 2a),
- at least one manipulating clamp (1, 1a), carried by the support (2, 2a) and suitable for holding at least one individual package, and components (6, 7, 8) for actuating the manipulating clamp (1, 1a) which are carried by the support (2, 2a) and are suitable for communicating to the manipulating clamp (1, 1a) movements for manipulating the package in space with respect to the support (2, 2a),
- means (3, 6, 36) for moving the support (2, 2a) along a given path,
- a plurality of operating stations (19a-19i) which are disposed facing the said path and each of which is suitable for cooperating with the manipulating clamp (1, 1a) positioned at its location, in order to carry out a respective given packaging operation,
- means (9, 10, 25, 27) for controlling on the one hand the movement means (3, 6, 36), in order to bring the manipulating clamp (1, 1a) to the locations of the different operating stations, successively, and on the other hand each operating station (19a-19i), and components (16, 17, 18) for actuating the manipulating clamp (1, 1a) situated at the location thereof, in order to carry out the said respective given packaging operation, these control means (9, 10, 25, 27) notably including, at each operating station (19a-19i), means (25) for routeing, between this operating station (19a-19i) and the manipulating clamp (1, 1a) situated at its location, instructions relating to the said respective given packaging operation,
characterised in that the control means (9, 10, 25, 27) include, at each operating station (19a-19i), a respective control device provided with a dedicated program, for transmitting to the components (16, 17, 18) actuating the manipulating clamp (1, 1a) situated at the location of this operating station (19a-19i), through the respective means (25) for routeing instructions, instructions for controlling the movements of this manipulating clamp (1, 1a) according to the respective given operation.

2. Device according to Claim 1, characterised in that the support (2a) is common to several manipulating clamps (1a) and is in the form of a wheel mounted rotatably about a shaft (36) and at the periphery of which are disposed the manipulating clamps (1a), which follow a circular path.

3. Device according to Claim 1, characterised in that several supports are provided, in the form of a set of carriages (2), each of which carries a respective manipulating clamp (1) and which are carried by at least guide rail (3) giving them a closed-circuit path.

4. Device according to Claim 3, characterised in that the guide rail (3) includes a rack (8) and in that each drive motor (6) carries a pinion (7) meshing with this rack (6).

5. Device according to one of Claims 3 and 4, characterised in that each carriage (2) has an electric drive motor (6), in that the guide rail (3) includes conductive tracks (9) supplying electric power to the motors (6) driving the carriages (2) and in that each carriage (2) has contacts (10) for supplying electric power to the respective motor (6), sliding against the conductive power-supply tracks (9).

6. Device according to Claim 5, characterised in that the conductive power-supply tracks (9) are interrupted at the location of an operating station (19a-19f) in order to stop each carriage (2) at the location thereof.

7. Device according to any one of Claims 1 to 6, characterised in that the means (25) for routeing instructions include, at each operating station (19a-19i), respective conductive tracks (25), and in that the manipulating clamp or clamps (1, 1a), respectively, are provided with contacts (27) connected to their actuating components (16, 17, 18) and able to come into contact with these conductive tracks (25) of an operating station (19a-19i) when the manipulating clamp (1, 1a) is situated at the location thereof.

8. Device according to Claims 6 and 7 in combination, characterised in that the restarting of a carriage (2) stopped at the location of an operating station (19a-19f) is afforded by means of a pulse supplied by the conductive tracks (25) of this operating station (19a-19f).

9. Device according to any one of Claims 1 to 8, characterised in that the manipulating clamp (1) has a gripper (12) fixed at the end of a horizontal arm (13) mounted both so as to slide in the axial direction and so as to rotate on itself inside a support (14) able to slide vertically with respect to the support (2, 2a), and in that the components (16, 17, 18) actuating the manipulating clamp include electric motors (16, 17, 18) respectively controlling the sliding of the arm (13), its rotation and the sliding of the support (14), so as to move the gripper (12) in all directions in space upon a demand from a control device, fitted to an operating station (19a-19i).

10. Device according to any one of Claims 1 to 9, characterised in that the operating stations (19a-19i) are interchangeable with stations able to carry out different operations.

11. Installation including a device according to one of Claims 1 to 10, characterised in that a secondary robot (29, 29a) including one or more working tools (32) disposed at the end of a shaft (33) mounted movably on a vertical column (34) is provided for feeding with products (20) a station (21) for picking up products (20) by means of the manipulating clamp (1).

12. Installation comprising a device according to one of Claims 1 to 10, characterised in that, downstream of the operations carried out by the device, a secondary robot (29, 29a) carries out one or more of the following additional operations: assembly of products (20) into boxes, filling and closure of the assembling boxes, placing of the boxes on a discharge and conveyance means.

## Patentansprüche

1. Vorrichtung zum Verpacken von verschiedenen Produkten in einzelnen Packungen geeigneter Art, mit
- wenigstens einem Halter (2, 2a),
- wenigstens einem Steuerschuh (1, 1a), der vom Halter (2, 2a) getragen ist, und Wenigstens eine einzelne Packung halten kann, sowie Einrichtungen (6, 7, 8) zum Betätigen des Steuerschuhs (1, 1a), die vom Halter (2, 2a) getragen sind und dem Steuerschuh (1, 1a) Bewegungen zum Steuern der Pakkung im Raum bezüglich des Halters (2, 2a) geben können,
- Einrichtungen (3, 6, 36) zum Versetzen des Halters (2, 2a) längs einer bestimmten Bahn,
- mehreren Arbeitsstationen (19a-19i), die der Bahn gegenüberstehend angeordnet sind und von denen jede mit dem Steuerschuh (1, 1a) zusammenarbeiten kann, wenn dieser auf dessen Stelle trifft, um einen bestimmten Arbeitsvorgang jeweils der Verpackung auszuführen,
- Einrichtungen (9, 10, 25, 27) zum Steuern einerseits der Einrichtungen (3, 6, 36) zum Versetzen, um den Steuerschuh (1, 1a) nacheinander an der Stelle der verschiedenen Arbeitsstationen anzuordnen, und andererseits zum Steuern jeder Arbeitsstation (19a-19i) und der Einrichtungen (16, 17, 18) zum Betätigen des Steuerschuhs (1, 1a), wenn diese zusammentreffen, um den bestimmten Arbeitsvorgang jeweils der Verpackung auszuführen, wobei die Steuereinrichtungen (19, 25, 27) insbesondere an jeder Arbeitsstation (19a-19i) Leitungseinrichtungen (35) zwischen der Arbeitsstation (19a-19i) und dem Steuerschuh (1, 1a), der auf dessen Stelle trifft, aufweist, um relative Anweisungen bezüglich des bestimmten Arbeitsvorganges hinsichtlich der Verpackung zu geben, dadurch gekennzeichnet, daß die Steuereinrichtungen (19, 25, 27) an jeder Arbeitsstation (19a-19i) eine jeweilige Befehlseinrichtung aufweisen, die mit einem bestimmten Programm versehen ist, um auf die Einrichtungen (16, 17, 18) zum Betätigen des Steuerschuhs (1, 1a), der sich an der Stelle der Arbeitsstation (19a-19i) befindet, über die jeweiligen Leitungseinrichtungen (25) für die Befehlsanweisungen Anweisungen für die Bewegungen dieses Steuerschuhs (1, 1a) in Abhängigkeit von dem jeweiligen bestimmten Arbeitsvorgang zu geben.

2. Vorrichtung nach Anspruch 1, dadurch gekennzeichnet, daß, der Kalter (2a) mehreren Steuerschuhen (1a) gemeinsam ist und die Form eines Rades hat, das um eine Achse (36) drehbar angebracht ist und an dessen Außenumfang die Steuerschuhe (1a) angebracht sind, die eine kreisförmige Bahn beschreiben.

3. Vorrichtung nach Anspruch 1, dadurch gekennzeichnet, daß mehrere Halter in Form einer Anordnung von Schlitten (2) vorgesehen sind, von denen jeder einen Steuerschuh (1) jeweils trägt und die auf wenigstens einer Führungsschiene (3) gehalten sind, die ihnen eine Bahn in Form eines geschlossenen Kreises gibt.

4. Vorrichtung nach Anspruch 3, dadurch gekennzeichnet, daß die Führungsschiene (3) eine Zahnstange (8) ist und daß jeder Antriebsmotor (6) ein Ritzel (7) trägt, das mit der Zahnstange (8) in Eingriff steht.

5. Vorrichtung nach einem der Ansprüche 3 und 4, dadurch gekennzeichnet, daß jeder Schlitten (2) einen Antriebselektromotor (6) aufweist, daß die Führungsschiene (3) Leiterbahnen (9) zur elektrischen Versorgung des Antriebsmotors (6) der Schlitten (2) aufweist und daß jeder Schlitten (2) elektrische Versorgungskontakte (10) des Motors (6) aufweist, die an den versorgungsleiterbahnen (9) entlanggleiten.

6. Vorrichtung nach Anspruch 5, dadurch gekennzeichnet, daß die Versorgungsleiterbahnen (9) an der Stelle einer Arbeitsstation (19a-19f) unterbrochen sind, um das Anhalten jedes Schlittens (2) an dieser Stelle sicherzustellen.

7. Vorrichtung nach einem der Ansprüche 1 bis 6, dadurch gekennzeichnet, daß die Leitungseinrichtungen (25) für die Anweisungen an jeder Arbeitsstation (19a-19i) Leiterbahnen (25) jeweils umfassen und daß der oder jeder Steuerschuh (1, 1a) jeweils mit Kontakten (27) versehen ist, die mit den Einrichtungen (16, 17, 18) zum Betätigen verbunden sind und in Kontakt mit den Leiterbahnen (25) einer Arbeitsstation (19a-19i) kommen, wenn der Steuerschuh (1, 1a) sich an dessen Stelle einfindet.

8. Vorrichtung nach Anspruch 6 und 7, dadurch gekennzeichnet, daß das Wiederanfahren eines Schlittens (2), der an der Stelle einer Arbeitsstation (19a-19f) angehalten ist, über einen Impuls bewirkt wird, der über die Leiterbahnen (25) der Arbeitsstation (19a-19f) kommt.

9. Vorrichtung nach einem der Ansprüche 1 bis 8, dadurch gekennzeichnet, daß der Steuerschuh (1) eine Klammer (12) aufweist, die am Ende eines horizontalen Armes (13) befestigt ist, der seinerseits verschiebbar in axialer Richtung und um sich selbst im Inneren eines Halters (14) drehbar ist, der vertikal bezüglich des Halters (2, 2a) verschiebbar ist, und daß die Einrichtungen (16, 17, 18) zum Betätigen des Steuerschuhs elektrische Motoren (16, 17, 18) umfassen, die jeweils die Verschiebung des Armes (13), die Drehung und Verschiebung des Halters (14) so steuern, daß die Klammer (12) in jeder Richtung im Raum unter der Steuerung einer Steuereinrichtung versetzt wird, die an der Arbeitsstation (19a-19i) vorgesehen ist.

10. Vorrichtung nach einem der Ansprüche 1 bis 9, dadurch gekennzeichnet, daß die Arbeitsstationen (19a-19i) austauschbar sind, wobei die Stationen verschiedene Arbeitsvorgänge bewirken können.

11. Anlage mit einer Vorrichtung nach einem der Ansprüche 1 bis 10, dadurch gekennzeichnet, daß ein sekundärer Roboter (29, 29a), der eines oder mehrere Arbeitswerkzeuge (32) aufweist, die am Ende einer Achse (33) angebracht sind, die beweglich an einer vertikalen Säule (34) angebracht ist, dazu vorgesehen ist, eine Station (21) mit Produkten (20) zu versorgen, um die Produkte (20) vom Steuerschuh (1) zu übernehmen.

12. Anlage mit einer Vorrichtung nach einem der Ansprüche 1 bis 10, dadurch gekennzeichnet, daß nach den durch die Vorrichtung ausgeführten Arbeitsvorgängen ein Sekundärroboter (29, 29a) einen oder mehrere der folgenden komplementären Arbeitsvorgänge ausführt: Umgruppierung der Produkte (20) in Schachteln, Füllen und Schließen der Umgruppierungsschachteln, Anordnen der Schachteln an einer Evakuuierungs- und Transporteinrichtung.
